# FASCICULE DE BREVET EUROPEEN

(11) **EP 2 598 373 B1**
(45) Date de publication et mention de la délivrance du brevet: **20.04.2016**
(21) Numéro de dépôt: 11755388.3
(22) Date de dépôt: 29.07.2011
(51) Int. Cl.: B60P 7/08, B60R 7/02

(54) **DISPOSITIF DE MAINTIEN D'ACCESSOIRE AVEC DES MOYENS DE RÉGLAGE, ET ENSEMBLE ASSOCIÉ.**
HALTEVORRICHTUNG MIT EINSTELLMITTELN UND ENTSPRECHENDE ANORDNUNG
RETAINING DEVICE WITH REGULATION MEANS AND ASSOCIATED ASSEMBLY

(30) Priorité: 30.07.2010 FR 1056352
(43) Date de publication de la demande: 05.06.2013
(73) Titulaire: Faurecia Automotive Industrie, 92000 Nanterre (FR); Advanced Comfort Systems France SAS - ACS France, 79300 Bressuire (FR)
(72) Inventeur: DECORME, Jacques, F-08090 Montcy Notre Dame (FR); BILLY, David, F-79300 Bressuire (FR); CRABEIL, Alexis, F-79140 Cerizay (FR)
(74) Mandataire: Domenego, Bertrand
(86) Numéro de dépôt international: PCT/FR2011/051847
(87) Numéro de publication internationale: WO 2012/013912

(56) Documents cités:
- EP-A1- 1 669 244
- DE-A1-102004 009 669
- FR-A3- 2 903 051
- FR-A3- 2 914 595
- US-A- 4 369 009
- US-B1- 6 772 929
- US-B2- 7 147 416

## Description

La présente invention concerne un dispositif de maintien d'au moins un accessoire, notamment pour véhicule automobile, du type comportant un élément d'appui et une sangle présentant une longueur active variable, la sangle étant destinée à maintenir l'accessoire contre l'élément d'appui.

Un tel dispositif est généralement destiné à équiper un élément intérieur du véhicule automobile, tel qu'un panneau délimitant un coffre de véhicule, un panneau de porte, les côtés latéraux de la console avant ou une partie arrière d'un siège avant du véhicule automobile.

On connaît déjà dans l'état de la technique un dispositif de maintien d'au moins un accessoire, du type comportant un élément d'appui solidaire d'une paroi intérieure du véhicule et une sangle de longueur variable destinée à maintenir l'accessoire contre l'élément d'appui. La sangle est fixée à ses extrémités sur l'élément d'appui.

La longueur de la sangle étant variable, il est possible d'adapter cette longueur aux dimensions d'un accessoire maintenu.

FR 2 914 595 décrit par exemple un dispositif de maintien connu.

Toutefois, un tel dispositif de maintien n'est pas adapté pour maintenir conjointement plusieurs accessoires de dimensions différentes. En effet, la longueur de la sangle s'adapte à l'accessoire dont les dimensions sont les plus grandes, si bien que cette sangle ne peut pas conjointement enserrer un autre accessoire de dimensions plus réduites.

Un autre état de la technique utilise un filet non extensible délimitant un espace mais ce dispositif n'est pas adapté pour toutes les formes d'accessoires.

US 7 147 416 décrit un dispositif de maintien similaire à celui du préambule de la revendication 1.

L'invention a notamment pour but de remédier à ces inconvénients en fournissant un dispositif de maintien d'au moins un accessoire, capable de maintenir de manière sécurisée au moins deux accessoires, même si leurs dimensions sont différentes.

En particulier, un but de l'invention est d'assurer un maintien efficace des accessoires lors d'un choc ou d'un freinage brutal pour les maintenir en position.

A cet effet, l'invention a pour objet un dispositif de maintien selon la revendication 1.

L'élément coulissant délimite deux compartiments indépendants avec la sangle et la paroi d'appui. La taille de la sangle peut alors varier de manière indépendante dans ces deux compartiments, si bien que ces compartiments peuvent recevoir chacun un accessoire de dimensions différentes.

En outre, l'élément est coulissant de façon à pouvoir adapter sa position sur le rail en fonction des dimensions de chaque accessoire maintenu par le dispositif.

Le dispositif de maintien selon l'invention peut comporter l'une ou plusieurs des caractéristiques suivantes, prise(s) seule(s) ou en combinaison :
- les moyens de réglage comprennent un enrouleur, la sangle s'enroulant autour de l'enrouleur lors de son passage depuis la configuration déployée vers la configuration rétractée ;
- les moyens d'immobilisation sont actifs pour chaque configuration de la sangle entre la configuration rétractée et la configuration déployée, les moyens de réglage comportant un organe de déblocage des moyens d'immobilisation propre à être actionné pour modifier la longueur active de la sangle ;
- le dispositif comporte des moyens additionnels de modification de la longueur active de la sangle, propres à être actionnés indépendamment de l'organe de déblocage lorsque les moyens d'immobilisation sont activés ;
- les moyens de réglage comprennent un boîtier recevant partiellement la sangle, le boîtier portant l'élément de rappel, les moyens d'immobilisation, l'organe de déblocage et les moyens additionnels de modification de la longueur active de la sangle ;
- les moyens additionnels de modification de la longueur active de la sangle sont aptes à entraîner l'enrouleur lorsque les moyens d'immobilisation sont activés ;
- la sangle est sensiblement non extensible ;
- la sangle est montée coulissante dans le passage d'engagement ;
- une première extrémité de la sangle est fixée sur les moyens de réglage, une deuxième extrémité de la sangle étant destinée à être fixée par rapport à la paroi intérieure, l'élément coulissant étant disposé entre les extrémités de la sangle ;
- lorsque la deuxième extrémité de la sangle est fixée par rapport à la paroi intérieure, le ou chaque élément coulissant est maintenu à demeure dans le rail ;
- le dispositif comporte un embout de fixation de l'extrémité de la sangle sur le rail, l'embout étant avantageusement destiné à coopérer avec une forme complémentaire ménagée dans le rail, notamment à une extrémité du rail ;
- l'élément coulissant comporte des moyens de préhension destinés à être manipulés par un utilisateur pour commander le coulissement de l'élément coulissant dans le rail ; et
- l'élément coulissant comporte un moyen de guidage qui écarte la sangle du rail pour permettre à un utilisateur de saisir la sangle lorsque l'élément coulissant est reçu dans le rail, la sangle étant plaquée contre le rail dans sa position de repos.

Par « fixation » ou « fixé » « par rapport à la paroi intérieure », on entend une fixation sur ou dans la paroi intérieure, directement sur cette paroi ou une fixation sur le rail qui est lui-même fixé ou intégré sur ou dans la paroi intérieure.

L'invention concerne également un élément intérieur de véhicule automobile comportant une paroi intérieure notamment choisie parmi une garniture latérale de coffre, un plancher, une garniture de seuil, un panneau de porte, les parois latérales d'une console avant, ou un élément de siège, caractérisé en ce qu'il comporte un dispositif tel que défini ci-dessus, le rail étant solidaire de la paroi intérieure.

L'invention sera mieux comprise à la lecture de la description qui va suivre, donnée uniquement à titre d'exemple, et faite en se référant aux figures annexées, dans lesquelles :
- la figure 1 est une vue en perspective d'un dispositif de maintien d'un ou plusieurs accessoires selon un exemple de mode de réalisation de l'invention, dans une position de repos dans laquelle aucun accessoire n'est inséré dans le dispositif ;
- la figure 2 est une vue schématique en perspective du dispositif de la figure 1, dans lequel on a inséré des accessoires à maintenir ;
- la figure 3 est une vue schématique en coupe suivant un plan horizontal du dispositif de la figure 1 ;
- les figures 4 et 5 sont des vues en coupe, respectivement transversale et longitudinale, d'un élément coulissant du dispositif de maintien de la figure 3 ;
- la figure 6 est une vue en perspective éclatée de l'élément coulissant des figures 4 et 5 ;
- la figure 7 est une vue en perspective d'un embout d'extrémité du dispositif de maintien de la figure 3 ;
- la figure 8 est une vue analogue à la figure 6 pour une variante d'élément coulissant ;
- la figure 9 est une vue schématique en coupe d'un mode de réalisation des moyens de réglage de la longueur active de la sangle du dispositif de la figure 1 ; et
- la figure 10 est une vue schématique en coupe d'un autre mode de réalisation des moyens de réglage de la longueur active de la sangle du dispositif de la figure 1

On a représenté sur les figures un dispositif de maintien 10 destiné à maintenir au moins un accessoire 12, notamment dans un véhicule automobile.

Le dispositif de maintien 10 est destiné à équiper une paroi intérieure 14 du véhicule automobile, formée dans cet exemple par une garniture latérale délimitant un coffre 16 du véhicule automobile.

En variante, le dispositif de maintien 10 équipe un plancher, un panneau de porte, une garniture de seuil, les parois latérales d'une console avant, un élément de siège ou tout autre élément intérieur du véhicule automobile.

Le dispositif de maintien 10 comporte un rail 18 formant glissière, rapporté dans le panneau latéral 14. Le rail 18 délimite une coulisse longitudinale, s'étendant entre deux extrémités de rail 18A, 18B, et débouchant vers l'intérieur du coffre 16. De préférence, le rail 18 est réalisé en plastique, en tôle ou en aluminium.

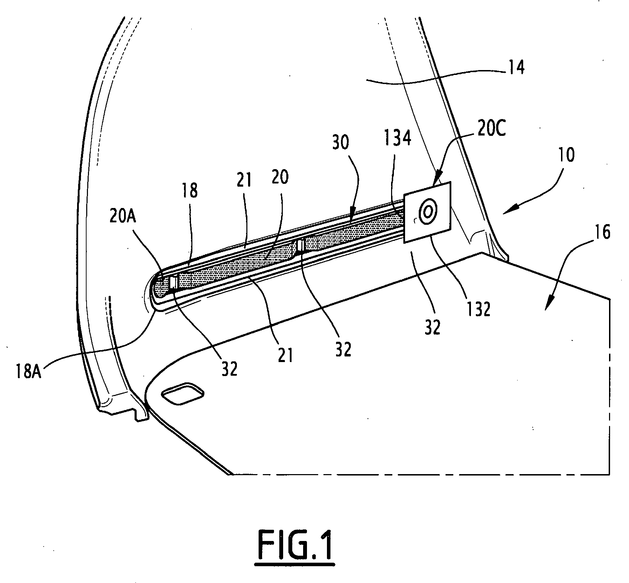

Le rail 18 et la coulisse qu'il délimite peuvent avoir une position horizontale et parallèle au plancher 16 (comme représenté sur la figure 1) ou peuvent être inclinés (non représenté), avec un angle d'inclinaison compris entre 0° et 45°, préférentiellement compris entre 5° et 30°. Dans la configuration inclinée, le rail 18 peut s'adapter à des hauteurs d'accessoire variables.

Le dispositif de maintien 10 comporte également une sangle 20 de longueur active variable, s'étendant longitudinalement entre deux extrémités de sangle 20A, 20B.

Selon l'invention, il comporte en outre des moyens 20C de réglage de la longueur active de la sangle, qui seront décrits en détail plus bas.

De préférence, le rail 18 présente au moins un rebord d'appui 21, contre lequel la sangle 20 est destinée à maintenir les accessoires 12. Le ou les rebords d'appui 21 affleurent sensiblement une surface intérieure définie par la paroi 14, de sorte que le dispositif de maintien 10 occupe un volume sensiblement nul dans le coffre.

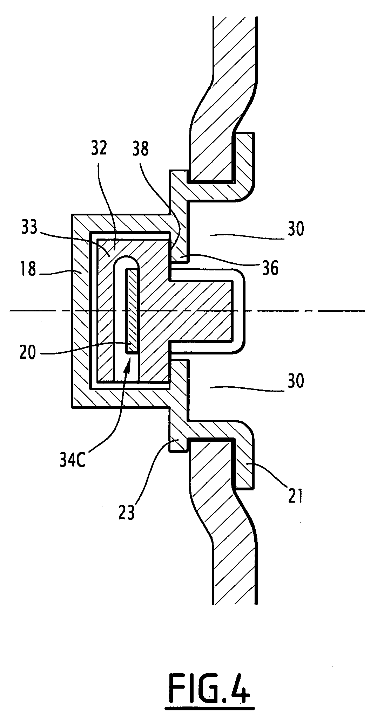

Afin d'assurer la fixation du rail 18 sur la paroi 14, la paroi 14 comporte un orifice de forme complémentaire au rail 18, dans lequel est inséré ce rail 18. Dans un mode de réalisation particulier, le rail 18 comporte des lèvres 23, s'étendant en regard des rebords d'appui 21, telles que le contour de l'orifice de la paroi 14 est inséré entre les lèvres 23 et les rebords d'appui 21, comme cela est représenté sur la figure 4.

Une extrémité 18A du rail 18 est munie de moyens de fixation 22A d'une extrémité correspondante 20A de la sangle 20. Par exemple, les moyens de fixation 22A comportent respectivement un embout 24A porté par la sangle 20.

Dans un mode de réalisation, l'embout 24A comporte au moins un orifice à travers lequel passe une boucle formée à l'extrémité 20A correspondante de la sangle 20.

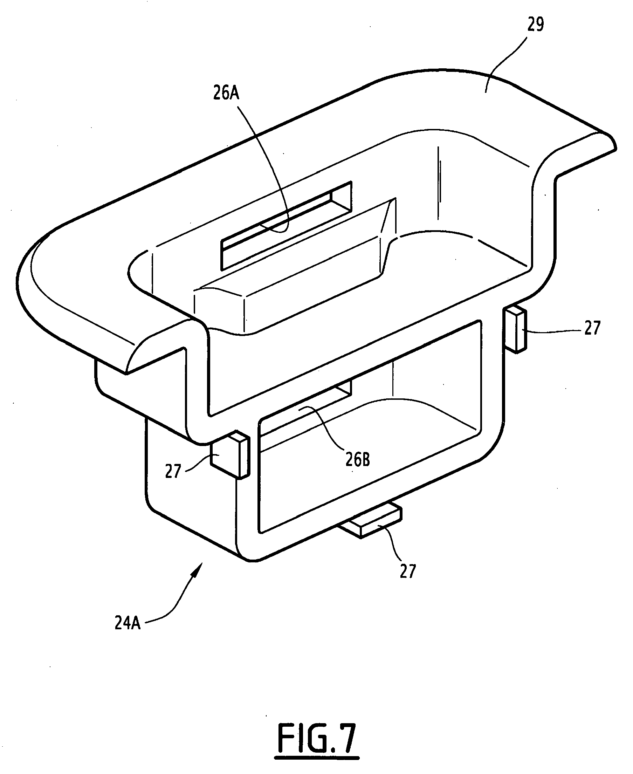

Dans un autre mode de réalisation représenté sur la figure 7, l'embout 24A comporte deux orifices 26A et 26B à travers lesquels passe une boucle formée à l'extrémité 20A correspondante de la sangle 20.

L'embout 24A comporte une ou plusieurs pattes d'encliquetage 27 destinées à coopérer avec des formes d'encliquetages complémentaires ménagées à l'extrémité 18A correspondante du rail 18.

L'embout 24A peut être profilé pour présenter une collerette 29, destinée à prolonger les rebords d'appui 21 du rail 18 lorsque cet embout 24A est retenu sur le rail 18.

Dans une variante, l'embout 24A ne comporte pas de pattes d'encliquetage 27 mais une collerette d'encastrement dans laquelle le rail 18 est inséré.

Dans un mode de réalisation particulier, l'embout est une forme simple, par exemple une plaque plate.

De préférence, l'embout 24A est réalisé en plastique, en tôle ou en aluminium.

Avantageusement, la sangle 20 est formée à partir d'un matériau sensiblement non extensible.

Par « sensiblement non extensible », on entend que l'allongement de la sangle, sans déformation irréversible est inférieur à 5 %.

La sangle 20 présente ainsi une longueur sensiblement constante entre ses extrémités 20A, 20B.

Comme cela est représenté sur la figure 1, la sangle 20 est plaquée contre le rail 18, dans la coulisse, dans sa position de repos. De préférence, le rail 18 comporte une cavité de manipulation 30, formée par un espace entre le rebord d'appui 21 et la sangle 20, et débouchant en dessous de la sangle 20 dans la coulisse de façon à permettre à un utilisateur de saisir cette sangle 20 lorsqu'elle est dans sa position de repos. En variante, la cavité 30 débouche au dessus de la sangle 20. Dans une autre variante, la cavité 30 débouche au-dessus et au dessous de la sangle 20.

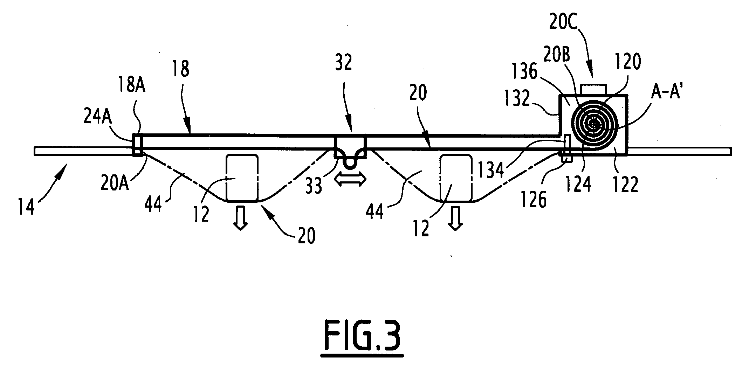

En référence à la figure 3, les moyens de réglage 20C comportent un enrouleur 120 monté rotatif autour d'un axe A-A' par rapport à la paroi, pour faire passer la sangle 20 d'une configuration rétractée à une configuration déployée et un organe 122 de rappel élastique de l'enrouleur 120 vers une configuration rétractée de la sangle 20. Les moyens de réglage 20C comprennent en outre un organe 124 d'immobilisation libérable de la sangle 20 dans chaque configuration entre sa configuration rétractée et sa configuration déployée et un bouton de déblocage 126 de l'organe d'immobilisation 124.

Les moyens de réglage 20C comportent avantageusement un organe additionnel 130 de réglage de la longueur active de la sangle 20, manoeuvrable indépendamment de l'organe de déblocage 126 pour régler la longueur active de la sangle 20 lorsque l'organe d'immobilisation 124 est activé.

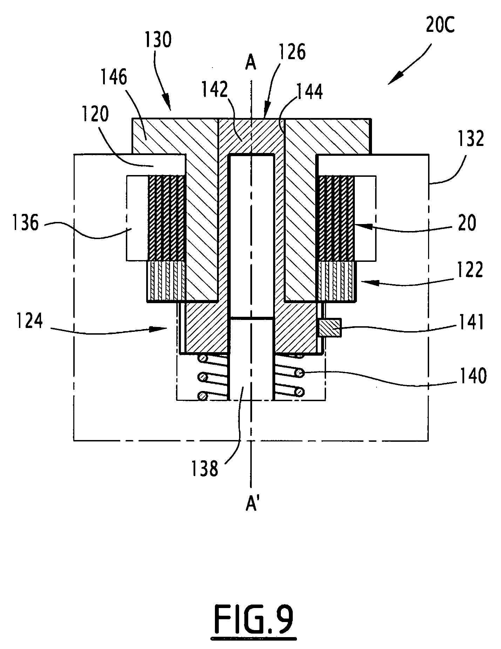

Dans un mode particulier de réalisation de l'invention représenté par exemple sur la figure 9, les moyens de réglage 20C sont logés dans un boîtier 132 défini ou monté dans ou sur la paroi intérieure 14 du véhicule automobile ou encore clipsé ou fixé sur la paroi intérieure 14 ou le rail 18. Le boitier 132 peut ainsi être monté de manière réversible ou irréversible sur la paroi 14 ou sur le rail 18.

Le boîtier 132 débouche par une ouverture 134 de passage de la sangle et délimite un volume intérieur 136 de réception de la sangle 20, de l'organe de rappel 122 et de l'organe d'immobilisation 124.

L'ouverture 134 débouche au voisinage de l'extrémité 18B du rail 18, par exemple en regard de la glissière définie par le rail 18.

L'enrouleur 120 est formé par un manchon cylindrique d'axe A-A' monté rotatif dans le boîtier 132 autour de l'axe A-A'.

Une extrémité 20B de la sangle 20 est montée fixe sur l'enrouleur 120.

La sangle 20 est enroulée autour de l'enrouleur 120. Ainsi, la rotation de l'enrouleur 120 dans un premier sens autour de l'axe A-A' déroule une longueur croissante de la sangle 20 vers sa configuration déployée, alors que la rotation de l'enrouleur 120 dans un deuxième sens opposé au premier sens autour de l'axe A-A' enroule une longueur croissante de la sangle 20 vers sa configuration rétractée autour de l'enrouleur 120. Ainsi, la sangle 20 présente une longueur active variable définie comme la longueur de la sangle qui n'est pas enroulée autour de l'enrouleur 120 et qui fait saillie à l'écart des moyens de réglage 20C, hors du boîtier 132 à travers l'ouverture 134.

Dans la configuration totalement déployée, la longueur active de la sangle 20 est maximale et la longueur de sangle 20 enroulée autour de l'enrouleur 120 est minimale.

Au contraire, dans la configuration totalement rétractée, la longueur active de la sangle 20 est minimale, et est généralement sensiblement égale à la longueur définie entre une extrémité 18A du rail 18 et l'ouverture 134, prise le long du rail 18. La longueur de sangle 20 enroulée autour de l'enrouleur 120 est alors maximale.

L'organe de rappel 122 est propre à entraîner en rotation l'enrouleur 120 dans le deuxième sens pour rappeler la sangle 20 dans sa configuration enroulée. Il est par exemple formé par un ressort à lame ou spiralé interposé entre une butée solidaire du boîtier 132 et l'enrouleur 120.

L'organe d'immobilisation 124 est propre à maintenir l'enrouleur 120 immobile par rapport au boîtier 132 dans une position angulaire définie autour de l'axe A-A'.

Dans le mode de réalisation représenté sur la figure 9, l'organe d'immobilisation 124 est formé par une roue. L'organe d'immobilisation 124 est mobile entre une position embrayée, engagée sur l'enrouleur 120, pour l'empêcher de tourner autour de l'axe A-A', et une position débrayée dans laquelle l'enrouleur 120 est libre en rotation autour de l'axe A-A'.

Avantageusement, l'organe d'immobilisation 124 est mobile en translation le long de l'axe A-A' entre sa position embrayée et sa position débrayée. Il est guidé par un axe 138 et est sollicité élastiquement en permanence vers sa position embrayée par un ressort 140, la position embrayée constituant ainsi une position de repos.

Dans la position embrayée, l'organe d'immobilisation 124 coopère avec l'enrouleur 120 pour empêcher la rotation de l'enrouleur 120 autour de l'axe A-A'.

Il coopère en outre avec une butée de retenue 141 solidaire du boîtier 132 et engagée à sa périphérie. La butée de retenue 141 assure un blocage angulaire de l'organe d'immobilisation.

Dans un autre mode de réalisation, l'organe d'immobilisation 124 et la butée de retenue 141 sont une seule et même pièce.

Dans la position débrayée, l'organe 124 s'est écarté de l'enrouleur 120 à l'encontre du ressort 140.

L'organe d'immobilisation 124 est totalement reçu dans le boitier 132.

L'organe de déblocage 126 est constitué par un bouton 142 accessible depuis l'extérieur du boîtier 132 par un utilisateur, le bouton 142 étant raccordé à l'organe d'immobilisation 124 pour permettre sa manoeuvre entre la position embrayée et la position débrayée.

Dans l'exemple représenté sur la figure 9, le bouton 142 est formé par un organe cylindrique monté coulissant dans une cavité 144 délimitée dans l'enrouleur 120 et solidaire à son extrémité libre de l'organe d'immobilisation.

Le bouton 142 est ainsi déplaçable le long de l'axe A-A' à l'encontre du ressort 140 pour déplacer l'organe d'immobilisation 124 entre sa position embrayée et sa position débrayée.

Dans cet exemple, l'organe de déblocage 126 est formé d'un seul tenant avec l'organe d'immobilisation 124, ce qui simplifie la structure des moyens de réglage 20C.

Dans la variante où les moyens de réglage 20C comportent un organe de réglage additionnel 130, cet organe 130 est par exemple formé par une molette 146 manoeuvrable depuis l'extérieur du boîtier 132. La molette 146 est solidaire de l'enrouleur 120. Dans l'exemple représenté sur la figure 9, la molette 146 fait saillie hors du boitier 132 à l'extrémité libre de l'enrouleur 120.

L'organe d'immobilisation 124 présente alors de préférence une denture périphérique coopérant avec la butée de retenue 141.

Dans ce cas, la rotation de la molette 146 permet d'entraîner en rotation l'enrouleur 120. Dans cette position, l'organe d'immobilisation 124 reste solidaire en rotation autour de l'axe A-A' avec l'enrouleur 120, et la butée 141 entre en prise successivement avec des dents périphériques successives situées à la périphérie de l'organe d'immobilisation 124.

Selon l'invention, le dispositif de maintien 10 comporte au moins un élément coulissant 32, par exemple deux éléments coulissants 32, comme cela est représenté sur les figures. En variante, le nombre d'éléments coulissants 32 est supérieur à deux. Chaque élément coulissant 32, représenté plus en détail sur les figures 4 à 6, délimite un passage 34 d'engagement de la sangle 20.

L'élément coulissant 32 comporte un corps de base 33 de section conjuguée à la coulisse, et une patte 35 de retenue de la sangle 20.

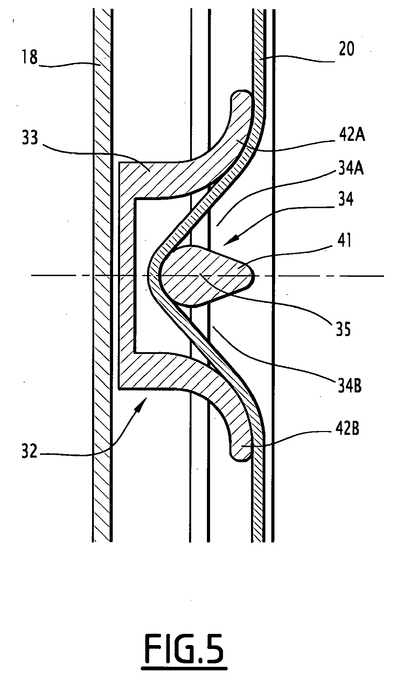

Le passage 34 est par exemple délimité longitudinalement entre la patte de retenue 35 et le corps de base 33, la sangle 20 contournant cette patte 35 de façon à être maintenue dans l'élément coulissant 32, comme cela est représenté sur les figures 4 et 5.

Le passage 34 débouche par deux ouvertures, une avant 34A et une arrière 34B de circulation de la sangle 20, et débouche vers le bas par une ouverture 34C d'introduction de la sangle 20 dans ce passage 34, l'ouverture d'introduction 34C raccordant les ouvertures de circulation 34A, 34B.

Les ouvertures de circulation 34A, 34B présentent ainsi un contour ouvert vers le bas.

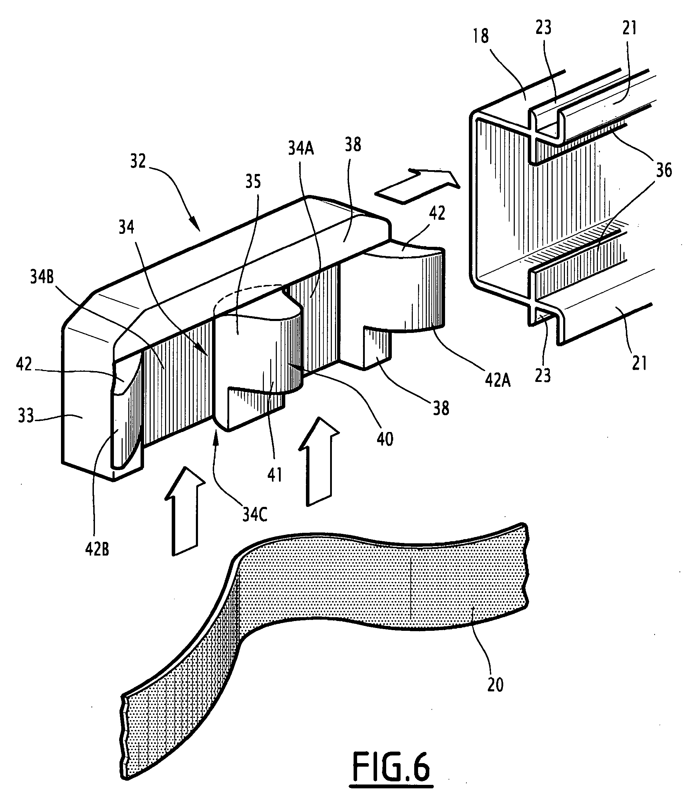

Ainsi que cela est représenté sur la figure 6, la sangle 20 est insérée dans le passage 34 à travers l'ouverture d'introduction 34C du côté de l'extrémité libre de la patte 35. Puis, l'élément coulissant 32 est glissé dans le rail 18, de sorte que la sangle 20 est retenue dans le passage 34, tout en étant apte à coulisser longitudinalement par rapport à l'élément coulissant 32.

Par exemple, la coulisse du rail 18 présente une section en forme de U, telle que le corps 33 de l'élément coulissant 32 coopère avec les parois en U de la coulisse, de façon à être apte à glisser le long de ces parois en U.

On notera que, lorsque l'élément coulissant 32 est inséré dans la coulisse définie par le rail 18, la paroi inférieure de cette coulisse obture l'ouverture d'introduction 34C de la sangle 20 dans le passage 34.

Le rail 18 comporte en outre des rebords intérieurs 36 destinés à coopérer avec des surfaces 38 du corps 33 de l'élément coulissant 32 de façon à maintenir cet élément coulissant 32 dans la coulisse définie par le rail 18.

De préférence, l'élément coulissant 32 est réalisé à base d'un matériau à faible coefficient de frottement, tel qu'une matière plastique polyamide, afin de pouvoir glisser sans résistance notable dans le rail 18.

Avantageusement, l'élément coulissant 32 est réalisé à base d'un matériau dont le coefficient de frottement dynamique à sec est inférieur à 0,4, et avantageusement compris entre 0,08 et 0,2. Le coefficient de frottement est mesuré au moyen du test TABER.

Ainsi, l'élément coulissant 32 est monté libre en translation de long d'un axe longitudinal.

En variante, l'élément coulissant 32 comporte au moins un moyen de roulement (non représenté) destinés à coopérer avec le rail de façon à favoriser le coulissement de l'élément 32. Par exemple, de tels moyens de roulement comportent des roulettes ou des billes.

Avantageusement, l'élément coulissant 32 comprend au moins un moyen de préhension 40, destiné à être manipulé par un utilisateur pour commander le coulissement de l'élément 32 dans le rail 18. Ainsi, même si l'élément coulissant 32 était confronté à une résistance à son coulissement dans le rail 18, l'utilisateur pourrait faire coulisser l'élément 32 grâce à ces moyens de préhension 40.

Par exemple, les moyens de préhension 40 comportent un bossage de préhension 41 porté par la patte 35, et faisant saillie vers l'extérieur de la coulisse du rail 18, et donc vers l'intérieur du coffre 16.

Dans un mode de réalisation particulier, l'élément coulissant 32 comporte au moins un moyen 42 de guidage longitudinal de la sangle 20. Ces moyens de guidage 42 permettent notamment d'imposer à la sangle 20 une direction à la sortie du passage 34, de façon à écarter suffisamment la sangle 20 du rail 18 pour permettre à l'utilisateur d'attraper plus facilement la sangle 20 lorsque celle-ci est en position de repos.

Les moyens de guidage 42 comprennent au moins une butée avant 42A et arrière 42B faisant saillie par rapport au corps de base 33, aux extrémités de ce corps 33 dans la direction longitudinale. Chaque butée 42A, 42B présente une surface de glissement de la sangle 20, qui diverge vers l'intérieur du coffre 16 et à l'écart du corps de base 33. Ainsi, lorsque la sangle 20 est insérée dans le passage 34, elle est retenue en appui entre la surface de glissement de la butée avant 42A, la patte de retenue 35, et la surface de glissement de la butée arrière 42B.

Lorsque l'élément coulissant 32 ne comporte pas de moyens 42 de guidage, l'utilisateur peut saisir la sangle 20 lorsque celle-ci est en position de repos grâce aux cavités 30 de manipulation qui se trouvent dans le rail 18.

Le dispositif de maintien selon l'invention permet de maintenir différents accessoires ou objets 12 de dimensions variées. En effet, la sangle 20 et le rail 18 définissent entre une extrémité 18A, 18B du rail 18 et l'un des éléments coulissants 32, ou entre deux éléments coulissants 32 consécutifs, des compartiments 44 distincts dans lesquels la sangle 20 peut être allongée de manière distincte.

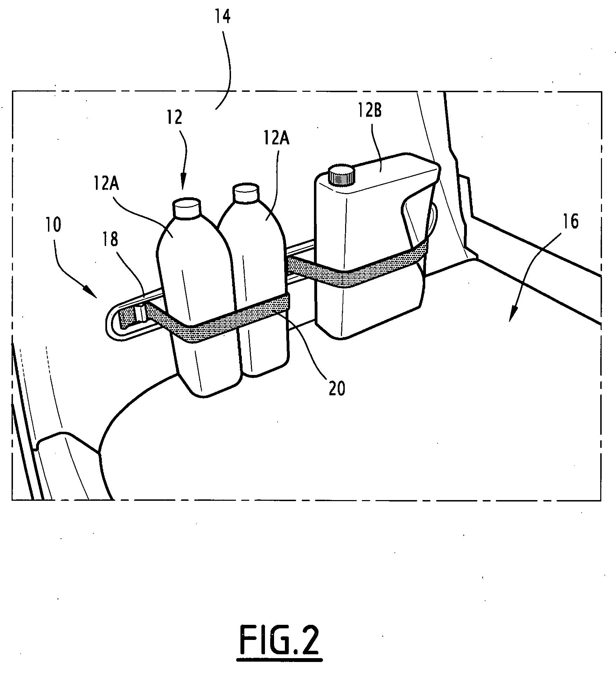

Ainsi, le dispositif de maintien selon l'invention permet de maintenir au moins deux accessoires ou objets 12 de dimensions différentes, par exemple deux bouteilles 12A et un bidon 12B tels que représentés sur la figure 2, dont les volumes d'encombrement sont différents.

Le nombre d'accessoires de dimensions différentes pouvant être maintenus par le dispositif de maintien 10 dépend notamment du nombre de compartiments 44 formés entre la sangle 20 et le rail 18, et donc dépend du nombre d'éléments coulissants 32. Conformément à l'exemple représenté sur la figure 2, dans lequel le dispositif de maintien 10 comporte deux éléments coulissants 32, on peut définir jusqu'à trois compartiments 44 distincts.

Chaque compartiment 44 s'adapte automatiquement aux dimensions de l'accessoire à maintenir. Ainsi un même compartiment 44 peut aussi bien maintenir des petits objets, à faible encombrement, que des grands objets, à fort encombrement.

Tels que représentés sur la figure 2, plusieurs accessoires 12A peuvent être maintenus dans un même compartiment 44. Dans ce cas, il est avantageux que les accessoires aient un volume d'encombrement similaire ou une épaisseur similaire.

Un procédé de montage d'un dispositif de maintien 10 tel que décrit précédemment sera présenté ci-dessous.

Au cours d'une première étape, les moyens de réglage 20C sont assemblés et l'extrémité 20B de la sangle 20 est fixée sur l'enrouleur 120.

Au cours d'une deuxième étape, les moyens de réglage 20C munis de la sangle 20 sont fixés par rapport à la paroi 14 en étant montés sur le rail 18, notamment à une extrémité du rail 18, ou directement sur ou dans la paroi 14.

La sangle 20 est ensuite déployée hors du boîtier 132 des moyens de réglage 20C pour avoir une longueur active supérieure à celle du rail 18. Les éléments coulissants 32 sont engagés sur la sangle 20. A cet effet, la sangle 20 est insérée dans le passage 34 de chaque élément coulissant 32, à travers l'ouverture d'introduction de façon à contourner la patte 35.

Au cours d'une troisième étape, les éléments coulissants 32 sont glissés dans le rail 18, en les introduisant par l'extrémité dégagée du rail 18. Pour chaque élément coulissant 32 introduit dans le rail 18, la paroi inférieure du rail 18 obture alors vers le bas l'ouverture d'introduction de la sangle 20 dans le passage 34, de sorte que la sangle 20 est alors retenue dans le passage 34.

Au cours d'une quatrième étape, l'embout 24A est assemblé à l'extrémité libre de la sangle 20, puis est fixé à l'extrémité 18A correspondante du rail 18.

L'organe de déblocage 126 est alors manoeuvré pour libérer l'enrouleur 120 et permettre la mise sous tension de la sangle 20 en regard du rail 18, sous l'effet de la force de rappel engendrée par l'organe de rappel 122

Le dispositif 10 reste solidaire grâce à la tension minimale imposée à la sangle 20 en position de repos sans aucun maintien d'accessoires.

Enfin, au cours d'une cinquième étape, le dispositif de maintien 10 est monté sur la paroi 14, dans l'orifice complémentaire de la paroi 14, par coopération des rebords d'appui 21 et des lèvres 23 avec un contour de cet orifice complémentaire.

Comme indiqué précédemment, lorsque le dispositif de maintien 10 est monté sur la paroi 14, les éléments coulissants 32 ne peuvent pas être extraits ou retirés du rail 18.

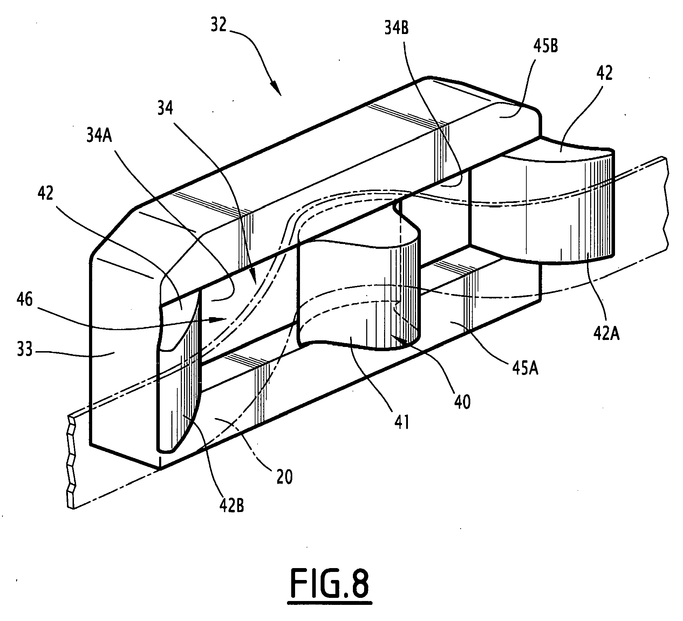

Dans une variante, représentée sur la figure 8, l'élément coulissant 32 présente un passage 34, deux ouvertures 34A et 34B de circulation de la sangle 20, deux surfaces latérales 45A et 45B fermées et un fond 46 ouvert.

Chaque ouverture 34A, 34B présente un contour fermé. Le passage 34 est délimité entre les ouvertures 34A, 34B, à l'extérieur de la patte 35.

Ainsi que cela est représenté sur la figure 8, la sangle 20 est insérée dans le passage 34 à travers l'ouverture de circulation 34A, elle passe à l'extérieur de la patte de retenue 35 du côté de la paroi 14, vers l'extérieur du véhicule et ressort par l'ouverture de circulation 34B.

Les rebords intérieurs 36 du rail 18 coopèrent avec les surfaces latérales 45A et 45B du corps 33 de l'élément coulissant 32 de façon à maintenir cet élément coulissant 32 dans la coulisse définie par le rail 18.

On décrira ci-dessous un mode d'utilisation du dispositif de maintien 10.

Initialement, la sangle 20 est au repos. La sangle 20 s'étend le long du rail 18. Elle occupe sa configuration rétractée, avec une longueur active minimale.

Dans un premier temps, l'utilisateur agrippe la sangle 20, notamment grâce à la cavité 30 procurant un accès aisé de préhension de cette sangle 20. Simultanément, il appuie sur l'organe de déblocage 126 pour libérer l'organe d'immobilisation 124 qui passe dans sa position débrayée. L'utilisateur tire alors la sangle 20 en l'éloignant du rail 18, vers l'intérieur du coffre 16.

La sangle 20 se déroule alors hors du moyen de réglage 20C par rotation libre de l'enrouleur 120 autour de l'axe A-A' dans le premier sens, à l'encontre de l'organe de rappel 122. Les éléments coulissants 32 glissent alors spontanément et librement dans la coulisse en direction des extrémités 18A, 18B du rail 18.

Lorsque le compartiment 44 délimité par la sangle 20 est suffisamment grand, l'utilisateur relâche l'organe de déblocage 126. L'organe d'immobilisation 124 retourne alors dans sa position embrayée sous l'effet du déploiement du ressort 140. La sangle 20 est alors immobilisée dans cette configuration.

L'utilisateur insère ensuite un ou plusieurs accessoires dans le compartiment 44. Puis, il active l'organe de déblocage 126 ce qui débraye l'organe d'immobilisation 124, l'organe de rappel 122 entraîne alors l'enrouleur dans le deuxième sens vers une configuration rétractée de la sangle. La longueur de la sangle 20, ainsi que les positions des éléments coulissants 32, s'adaptent alors automatiquement aux dimensions de l'accessoire inséré, par le retrait de la sangle 20 vers sa configuration rétractée sous l'effet de la sollicitation engendrée par l'organe de rappel 122.

L'utilisateur peut ensuite renouveler ces opérations pour un autre compartiment 44, afin d'insérer d'autres accessoires, généralement de dimensions différentes.

S'il souhaite ensuite ajuster finement la longueur active de la sangle, l'utilisateur manoeuvre l'organe de réglage additionnel 130 pour entraîner en rotation l'enrouleur 120, l'organe d'immobilisation 124 restant embrayé sur l'enrouleur 120.

Les accessoires sont alors maintenus de manière sécurisée dans les différents compartiments 44, même en cas d'accélération ou de décélération violente ou de choc dans le véhicule, la sangle 20 étant bloquée de manière ferme par l'organe d'immobilisation 124 des moyens de réglage 20C dans sa configuration de maintien des accessoires contre la paroi 14.

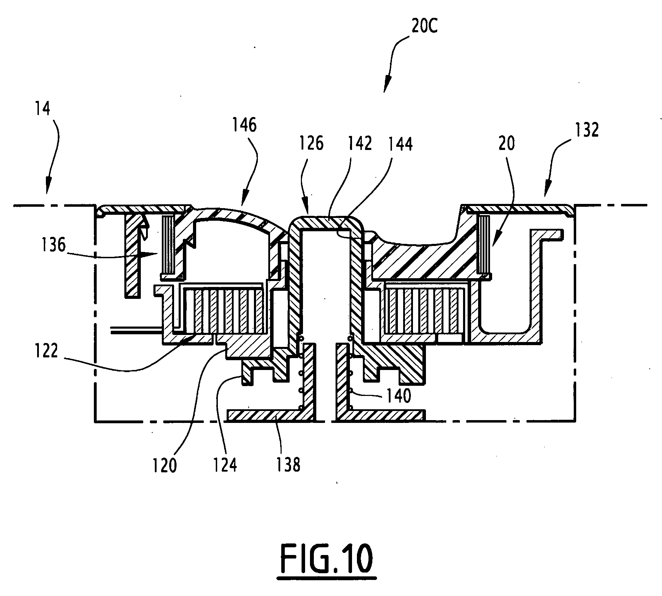

La figure 10 illustre une variante de réalisation des moyens de réglage 20C. Dans cette variante, l'organe de réglage additionnel 130 est formé dans l'enrouleur 120. A cet effet, la sangle 20 est enroulée autour de la molette 146.

L'enrouleur 120, l'organe de déblocage 126 et la molette 146 sont alors reçus totalement dans le boitier 132 sans faire saillie en dehors de celui-ci. Le boitier 132 est monté dans la paroi intérieure 14 ou sur le rail 18, de sorte que les moyens de réglage 20C ne dépassent pas dans le coffre.

On notera que l'invention n'est pas limitée au mode de réalisation précédemment décrit, mais pourrait présenter diverses variantes sans sortir du cadre des revendications.

Ainsi, dans une variante, les moyens de réglage 20C sont dépourvus d'organe d'immobilisation 124 et d'organe de déblocage 126. La sangle 20 est alors sollicitée en permanence vers sa configuration enroulée. Les moyens de réglage 20C peuvent alors comporter un moyen d'immobilisation désactivé au repos et activable lorsqu'une force donnée s'applique sur la sangle 20, par exemple lors d'une accélération ou d'une décélération importante du véhicule ou encore d'un choc.

Dans une autre variante, les moyens de réglage 20C sont dépourvus d'enrouleur 120. La sangle 20 est reçue partiellement dans un logement longitudinal délimité dans la paroi 14, et présente une longueur active en saillie hors du logement. L'organe de rappel 122 peut alors être formé par un lien élastique tel qu'un tendeur.

## Revendications

1. Dispositif (10) de maintien d'au moins un accessoire (12) contre une paroi intérieure (14) d'un véhicule automobile, du type comportant :
- un élément d'appui (21) ; et
- une sangle (20) présentant une longueur active variable, la sangle (20) étant destinée à maintenir l'accessoire (12) contre l'élément d'appui (21),
- un rail (18) s'étendant entre deux extrémités de rail (18A, 18B) le long de la sangle (20), le rail (18) étant destiné à être solidaire de la paroi (14), et
- au moins un élément coulissant (32), destiné à coulisser le long du rail (18), l'élément coulissant (32) comportant un passage (34) d'engagement de la sangle (20), et dans lequel :
- la sangle (20) et le rail (18) définissent, entre chaque extrémité du rail (18) et l'un des au moins un élément coulissant (32), et/ou entre deux éléments coulissants (32) consécutifs, des compartiments (44) distincts,
- le dispositif de maintien (10) comporte des moyens (20C) de réglage de la longueur active de la sangle (20), la sangle (20) étant déployable par rapport aux moyens de réglage (20C) entre une configuration totalement rétractée de longueur active minimale et une configuration totalement déployée de longueur active maximale, les moyens de réglage (20C) comprenant un élément (122) de rappel de la sangle (20) vers sa configuration rétractée,
**caractérisé en ce que** les moyens de réglage (20C) comportent des moyens (124) d'immobilisation de la sangle (20) pour maintenir la sangle (20) dans une configuration de longueur active donnée entre la configuration rétractée et la configuration déployée.

2. Dispositif selon la revendication 1, **caractérisée en ce que** les moyens de réglage (20C) comprennent un enrouleur (120), la sangle (20) s'enroulant autour de l'enrouleur (120) lors de son passage depuis la configuration déployée vers la configuration rétractée.

3. Dispositif (10) selon la revendication 1 ou 2, **caractérisé en ce que** les moyens d'immobilisation (124) sont actifs pour chaque configuration de la sangle (20) entre la configuration rétractée et la configuration déployée, les moyens de réglage (20C) comportant un organe (126) de déblocage des moyens d'immobilisation (124) propre à être actionné pour modifier la longueur active de la sangle (20).

4. Dispositif (10) selon la revendication 3, **caractérisé en ce qu'**il comporte des moyens additionnels (146) de modification de la longueur active de la sangle (20), propres à être actionnés indépendamment de l'organe de déblocage (126) lorsque les moyens d'immobilisation (124) sont activés.

5. Dispositif (10) selon la revendication 4, **caractérisé en ce que** les moyens de réglage (20C) comprennent un boitier (132) recevant partiellement la sangle (20), le boitier (132) portant l'élément de rappel (122), les moyens d'immobilisation (124), l'organe de déblocage (126) et les moyens additionnels (146) de modification de la longueur active de la sangle (20).

6. Dispositif (10) selon la revendication 4 ou 5, prise en combinaison avec la revendication 2, **caractérisé en ce que** les moyens additionnels de modification (146) de la longueur active de la sangle (20) sont aptes à entraîner l'enrouleur (120) lorsque les moyens d'immobilisation (120) sont activés.

7. Dispositif (10) selon l'une quelconque des revendications précédentes, **caractérisé en ce que** la sangle (20) est sensiblement non extensible.

8. Dispositif (10) selon l'une quelconque des revendications précédentes, **caractérisé en ce que** la sangle (20) est montée coulissante dans le passage d'engagement (34).

9. Dispositif (10) selon l'une quelconque des revendications précédentes, **caractérisé en ce qu'**une première extrémité (20B) de la sangle (20) est fixée sur les moyens de réglage (34C), une deuxième extrémité (20A) de la sangle (20) étant destinée à être fixée par rapport à la paroi intérieure (14), l'élément coulissant (32) étant disposé entre les extrémités (20A, 20B) de la sangle (20).

10. Dispositif (10) selon la revendication 9, **caractérisé en ce que** lorsque la deuxième extrémité (20A) de la sangle (20) est fixée par rapport à la paroi intérieure (14), le ou chaque élément coulissant (32) est maintenu à demeure dans le rail (18).

11. Dispositif (10) selon l'une quelconque des revendications 9 ou 10, **caractérisé en ce qu'**il comporte un embout (24A) de fixation de l'extrémité de la sangle sur le rail (18), l'embout (24A) étant avantageusement destiné à coopérer avec une forme complémentaire ménagée dans le rail (18), notamment à une extrémité du rail (18).

12. Dispositif (10) selon l'une quelconque des revendications précédentes, **caractérisé en ce que** l'élément coulissant (32) comporte des moyens de préhension (45) destinés à être manipulés par un utilisateur pour commander le coulissement de l'élément coulissant (32) dans le rail (18).

13. Dispositif (10) selon l'une quelconque des revendications précédentes, **caractérisé en ce que** l'élément coulissant (32) comporte un moyen de guidage (42) qui écarte la sangle (20) du rail (18) pour permettre à un utilisateur de saisir la sangle (20) lorsque l'élément coulissant (32) est reçu dans le rail (18), la sangle (20) étant plaquée contre le rail (18) dans sa position de repos.

14. Elément intérieur de véhicule automobile comportant une paroi intérieure (14) notamment choisie parmi une garniture latérale de coffre, un plancher, une garniture de seuil, un panneau de porte, les parois latérales d'une console avant, ou un élément de siège, **caractérisé en ce qu'**il comporte un dispositif (10) selon l'une quelconque des revendications précédentes, le rail (18) étant solidaire de la paroi intérieure (14).

## Patentansprüche

1. Vorrichtung (10) zum Halten wenigstens eines Zubehörteils (12) an einer Innenwand (14) eines Kraftfahrzeugs, die von dem Typ ist, der Folgendes umfasst:
- ein Abstützelement (21); und
- einen Gurt (20), der eine veränderliche aktive Länge aufweist, wobei der Gurt (20) dazu bestimmt ist, das Zubehörteil (12) an dem Abstützelement (21) zu halten,
- eine Schiene (18), die sich zwischen zwei Enden der Schiene (18A, 18B) längs des Gurts (20) erstreckt, wobei die Schiene (18) dazu bestimmt ist, mit der Wand (14) fest verbunden zu sein, und
- wenigstens ein Gleitelement (32), das dazu bestimmt ist, längs der Schiene (18) zu gleiten, wobei das Gleitelement (32) einen Durchlass (34) für den Eingriff des Gurts (20) aufweist, und wobei:
- der Gurt (20) und die Schiene (18) zwischen jedem Ende der Schiene (18) und einem des wenigstens einen Gleitelements (32) und/oder zwischen zwei aufeinander folgenden Gleitelementen (32) voneinander verschiedene Fächer (44) definieren,
- die Haltevorrichtung (10) Mittel (20C) zum Einstellen der aktiven Länge des Gurts (20) umfasst, wobei der Gurt (20) in Bezug auf die Einstellmittel (20C) zwischen einer vollständig eingefahrenen Konfiguration mit minimaler aktiver Länge und einer vollständig ausgefahrenen Konfiguration mit maximaler aktiver Länge ausfahrbar ist, wobei die Einstellmittel (20C) ein Element (122) zum Rückstellen des Gurts (20) in seine eingefahrene Konfiguration umfassen,
**dadurch gekennzeichnet, dass** die Einstellmittel (20C) Mittel (124) zum Blockieren des Gurts (20) umfassen, um den Gurt (20) in einer Konfiguration mit gegebener aktiver Länge zwischen der eingefahrenen Konfiguration und der ausgefahrenen Konfiguration zu halten.

2. Vorrichtung nach Anspruch 1, **dadurch gekennzeichnet, dass** die Einstellmittel (20C) eine Aufwickeleinrichtung (120) umfassen, wobei sich der Gurt (20) um die Aufwickeleinrichtung (120) aufwickelt, wenn er von der ausgefahrenen Konfiguration in die eingefahrene Konfiguration übergeht.

3. Vorrichtung (10) nach Anspruch 1 oder 2, **dadurch gekennzeichnet, dass** die Blockiermittel (124) für jede Konfiguration des Gurts (20) zwischen der eingefahrenen Konfiguration und der ausgefahrenen Konfiguration aktiv sind, wobei die Einstellmittel (20C) ein Organ (126) zum Entsperren der Blockiermittel (124) umfassen, das betätigt werden kann, um die aktive Länge des Gurts (20) zu verändern.

4. Vorrichtung (10) nach Anspruch 3, **dadurch gekennzeichnet, dass** sie zusätzliche Mittel (146) zum Verändern der aktiven Länge des Gurts (20) umfasst, die unabhängig von dem Entsperrorgan (126) betätigt werden können, wenn die Blockiermittel (124) aktiviert sind.

5. Vorrichtung (10) nach Anspruch 4, **dadurch gekennzeichnet, dass** die Einstellmittel (20C) ein Gehäuse (132) umfassen, das den Gurt (20) teilweise aufnimmt, wobei das Gehäuse (132) das Rückstellelement (122), die Blockiermittel (124), das Entsperrorgan (126) und die zusätzlichen Mittel (146) zum Verändern der aktiven Länge des Gurts (20) trägt.

6. Vorrichtung (10) nach Anspruch 4 oder 5 in Kombination mit Anspruch 2, **dadurch gekennzeichnet, dass** die zusätzlichen Mittel (146) zum Verändern der aktiven Länge des Gurts (20) die Aufwickeleinrichtung (120) antreiben können, wenn die Blockiermittel (120) aktiviert sind.

7. Vorrichtung (10) nach einem der vorhergehenden Ansprüche, **dadurch gekennzeichnet, dass** der Gurt (20) im Wesentlichen nicht dehnbar ist.

8. Vorrichtung (10) nach einem der vorhergehenden Ansprüche, **dadurch gekennzeichnet, dass** der Gurt (20) in dem Eingriffdurchlass (34) gleitend montiert ist.

9. Vorrichtung (10) nach einem der vorhergehenden Ansprüche, **dadurch gekennzeichnet, dass** ein erstes Ende (20B) des Gurts (20) an dem Einstellmitteln (34C) befestigt ist, ein zweites Ende (20A) des Gurts (20) dazu bestimmt ist, in Bezug auf die Innenwand (14) befestigt zu werden, und das Gleitelement (32) zwischen den Enden (20A, 20B) des Gurts (20) angeordnet ist.

10. Vorrichtung (10) nach Anspruch 9, **dadurch gekennzeichnet, dass** das oder jedes Gleitelement (32) dann, wenn das zweite Ende (20A) des Gurts (20) in Bezug auf die Innenwand (14) befestigt ist, in der Schiene (18) stationär gehalten wird.

11. Vorrichtung (10) nach einem der Ansprüche 9 oder 10, **dadurch gekennzeichnet, dass** es einen Ansatz (24A) zum Befestigen des Endes des Gurts an der Schiene (18) umfasst, wobei der Ansatz (24A) vorteilhaft dazu bestimmt ist, mit einer komplementären Form zusammenzuwirken, die in der Schiene (18), insbesondere an einem Ende der Schiene (18), ausgespart ist.

12. Vorrichtung (10) nach einem der vorhergehenden Ansprüche, **dadurch gekennzeichnet, dass** das Gleitelement (32) Greifmittel (45) umfasst, die dazu bestimmt sind, von einem Anwender betätigt zu werden, um das Gleiten des Gleitelements (32) mit der Schiene (18) zu steuern.

13. Vorrichtung (10) nach einem der vorhergehenden Ansprüche, **dadurch gekennzeichnet, dass** das Gleitelement (32) ein Führungsmittel (42) umfasst, das den Gurt (20) von der Schiene (18) beabstandet, um einem Anwender zu ermöglichen, den Gurt (20) zu ergreifen, wenn das Gleitelement (32) in der Schiene (18) aufgenommen ist, wobei der Gurt (20) in seiner Ruheposition gegen die Schiene (18) gedrückt wird.

14. Interieurelement eines Kraftfahrzeugs, das eine Innenwand (14) umfasst, die insbesondere aus einer Seitenverkleidung eines Kofferraums, einem Fußboden, einer Türschwellerverkleidung, einer Türplatte, seitlichen Wänden einer Frontkonsole oder aus einem Sitzelement gewählt ist, **dadurch gekennzeichnet, dass** es eine Vorrichtung (10) nach einem der vorhergehenden Ansprüche umfasst, wobei die Schiene (18) mit der Innenwand (14) fest verbunden ist.

## Claims

1. A device (10) for keeping at least one accessory (12) against an inside wall (14) of a motor vehicle, including:
- a bearing element (21); and
- a strap (20) with a variable active length, the strap (20) being designed to keep the accessory (12) against the bearing element (21),
- a rail (18) extending between two rail ends (18A, 18B) along the strap (20), the rail (18) being designed to be secured to the wall (14); and
- at least one sliding element (32) which is to slide along the rail (18), the sliding element (32) comprising a passage (34) into which the strap (20) is to be inserted;
and wherein:
- the strap (20) and the rail (18) define, between each end (18A, 18B) of the rail (18) and one of the at least one sliding elements (32), and/or between two consecutive sliding elements (32), distinct compartments (44),
- the device (10) comprise means (20C) for adjusting the active length of the strap (20), the strap (20) being able to be extended, relative to the adjustment means (20C), between a completely retracted configuration, in which the active length is at a minimum, and a completely extended configuration, in which the active length is at a maximum, the adjustment means (20C) including an element (122) for returning the strap (20) to the retracted configuration thereof,
**characterized in that** the adjusting means (20C) includes means (124) for immobilizing the strap (20) to keep the strap (20) in a given active length configuration between the retracted configuration and the extended configuration.

2. The device according to claim 1, **characterized in that** the adjustment means (20C) comprise a winder (120), the strap (20) winding around the winder (120) when it goes from the extended configuration to the retracted configuration.

3. The device (10) according to claim 1 or 2, **characterized in that** the immobilizing means (124) are active for each configuration of the strap (20) between the retracted configuration and the extended configuration, the adjustment means (20C) including an unblocking member (126) for the immobilizing means (124) that can be actuated to modify the active length of the strap (20).

4. The device (10) according to claim 3, **characterized in that** it includes additional means (146) for modifying the active length of the strap (20), which can be actuated independently of the unblocking member (126) when the immobilizing means (124) are activated.

5. The device (10) according to claim 4, **characterized in that** the adjustment means (20C) comprise a housing (132) partially receiving the strap (20), the housing (132) bearing the return element (122), the immobilizing means (124), the unblocking member (126), and the additional means (146) for modifying the active length of the strap (20).

6. The device (10) according to claim 4 or 5, combined with claim 2, **characterized in that** the additional means (146) for modifying the active length of the strap (20) can drive the winder (120) when the immobilizing means (120) are activated.

7. The device (10) according to any one of the preceding claims, **characterized in that** the strap (20) is substantially non-extensible.

8. The device (10) according to any one of the preceding claims, **characterized in that** the strap (20) is slidably mounted in the insertion passage (34).

9. The device (10) according to any one of the preceding claims, **characterized in that** a first end (20B) of the strap (20) is fastened on the adjusting means (34C), a second end (20A) of the strap (20) being designed to be fixed relative to the inner wall (14), the sliding element (32) being arranged between the ends (20A, 20B) of the strap (20).

10. The device (10) according to claim 9, **characterized in that** when the second end (20A) of the strap (20) is fixed relative to the inner wall (14), the or each sliding element (32) is permanently maintained in the rail (18).

11. The device (10) according to any one of claims 9 or 10, **characterized in that** it includes a tip (24A) for fastening the end of the strap on the rail (18), the tip (24A) advantageously being designed to cooperate with a complementary shape formed the rail (18), in particular at one end of the rail (18).

12. The device (10) according to any one of the preceding claims, **characterized in that** the sliding element (32) includes gripping means (45) designed to be handled by a user to control the sliding of the sliding element (32) in the rail (18).

13. The device (10) according to any one of the preceding claims, **characterized in that** the sliding element (32) includes guide means (42) that separate the strap (20) from the rail (18) to allow a user to grasp the strap (20) when the sliding element (32) is received at the rail (18), the strap (20) being pressed against the rail (18) in the idle position thereof.

14. An inside motor vehicle element including an inner wall (14) in particular chosen from among lateral trunk trim, a floor, threshold trim, a door panel, the lateral walls of the front console, or a seat element, **characterized in that** it includes a device (10) according to any one of the preceding claims, the rail (18) being secured to the inner wall (14).
